# EUROPÄISCHE PATENTSCHRIFT

(11) **EP 0 995 539 B1**
(45) Veröffentlichungstag und Bekanntmachung des Hinweises auf die Patenterteilung: **08.09.2004**
(21) Anmeldenummer: 99119444.0
(22) Anmeldetag: 30.09.1999
(51) Int. Cl.: B23Q 1/01, B23Q 11/00, B23Q 1/25, B23Q 1/58, B23Q 7/00

(54) **Bearbeitungsvorrichtung für Werkstücke**
Machining device for work pieces
Dispositif d'usinage de pièces

(30) Priorität: 14.10.1998 DE 19847378
(43) Veröffentlichungstag der Anmeldung: 26.04.2000
(73) Patentinhaber: Werkzeugmaschinenfabrik Zerbst GmbH, 39261 Zerbst (DE)
(72) Erfinder: Hessbrüggen, Norbert, 73084 Salach (DE)
(74) Vertreter: Zmyj, Erwin, Dipl.-Ing., Dipl.-Wirtsch.-Ing.

(56) Entgegenhaltungen:
- DE-A- 3 314 758
- DE-A- 19 502 341
- US-A- 2 963 725

## Beschreibung

Die Erfindung bezieht sich auf eine Bearbeitungsvorrichtung für Werkstücke mit einer Werkstück förder einrichtung mit mindestens zwei Werkstückhaltevorrichtungen, die relativ zueinander verfahrbar sind, sowie mit mindestens einem mindestens in einer senkrecht zu der Fahrbahn der Werkstückhaltevorrichtungen verfahrbaren Werkzeugträger, der soweit verfahrbar ist, dass der Angriffspunkt des Werkzeuges am Werkstück unterhalb der Werkstückrotationsachse bzw. Werkstückschwenkachse liegt, wobei die einander zugeordneten Werkstückhaltevorrichtungen sowohl gemeinsam als auch getrennt voneinander verfahrbar sind.

Eine Bearbeitungsvorrichtung dieser Art ist aus der DE-42 36 866 Al bekannt. Eine Bearbeitungsvorrichtung dieser Art dient den üblichen Bearbeitungsarten wie zum Beispiel Drehen, Bohren oder Fräsen, wobei die Führungsbahnen der einzelnen Bettschlitten durch Spänefall beeinträchtigt werden können. Um hier sicher Abhilfe zu leisten, könnte man Teleskopabdeckungen für die Führungsbahnen vorsehen. Solche Teleskopabdeckungen sind nicht nur aufwendig, sondern auch störanfällig und unterliegen wegen der auffliegenden Späne einem erhöhten Verschleiß.

Bei dieser bekannten Vorrichtung ist ein Werkstückwechsel, der durch die Werkstückhaltevorrichtungen durchgeführt werden könnte, nicht vorgesehen.

Bei anderen bekannten Bearbeitungsvorrichtungen erfolgt der Werkstückwechsel manuell durch den Bediener oder bei automatisierten Maschinen häufig durch längs der Maschinenachse aufgestellte Ladeportale, bei denen das Werkstück zum Beladen der Maschine von einem quer zur Maschinenachse an der Maschinenstirnseite aufgestellten Transportband durch eine am Portal in zwei Achsen verfahrbar angeordnete Greifereinrichtung gegriffen, über Kopfhöhe angehoben, längsseits in die Maschine verfahren und zum Spannen in die Maschine abgesenkt wird. Der Entladevorgang erfolgt in umgekehrter Weise.

Es gibt auch Lösungen, bei denen ein Industrieroboter anstelle des Maschinenbedieners in etwa dessen Bewegungsabläufe nachbildend, vom Bedienplatz aus die Maschine be- und entlädt.

Beide Lösungen sind teuer. Der Roboter benötigt darüber hinaus noch viel Platz, ist hinderlich und relativ langsam.

Aufgabe der Erfindung ist es, eine Bearbeitungsvorrichtung zu schaffen, die unanfälliger hinsichtlich des Verschleißes und der Beschädigung der Führungsbahnen oder der sie schützenden Teleskopabdeckung ist, die insbesondere für die unterschiedlichsten Bearbeitungsvorgänge, wie z.B. das Drehen, Rundschleifen, Wälzfräsen, Bohren, Fräsen, Nutenfräsen, Nutenschleifen, Härten, Schweißen, Fügen, spanlos Umformen sowie die Endenbearbeitung von Werkstücken bei geringem Umrüstaufwand für die jeweiligen unterschiedlichen Bearbeitungsvorgänge oder in einer Werkstückspannung nacheinander ohne Umrüstaufwand verwendbar ist und die eine schnelle und kostengünstige Beladung und Entladung ermöglicht.

Diese Aufgabe wird ausgehend von einer Bearbeitungsvorrichtung der eingangs erläuterten Art erfindungsgemäß dadurch gelöst, dass die Führungsbahn bzw. die Führungsbahnen der Werkstückhaltevorrichtungen oberhalb der Werkstückrotationsachse bzw. der Werkstückschwenkachse liegt bzw. liegen und dass die einander zugeordneten Werkstückhaltevorrichtungen nach unten hängend an der horizontalen Führungsbahn bzw. an den Führungsbahnen in eine Position oberhalb einer neben dem Arbeitsraum angeordneten Werkstückfördereinrichtung verfahrbar geführt sind.

Aufgrund dieser Ausgestaltung liegen die Führungsspanen für die Werkstückhaltevorrichtungen außerhalb des Spänefallbereiches. Die vielseitige Verwendbarkeit einer solchen Bearbeitungsvorrichtung ergibt sich daraus, dass als Werkstückhaltevorrichtungen die unterschiedlichsten, im Werkzeugmaschinenbau bekannten Haltevorrichtungen verwendet werden können, die beispielsweise in den Unteransprüchen erläutert sind. Durch unterschiedliche Werkzeughaltevorrichtung und unterschiedliche Werkzeuge lassen sich dann die verschiedensten Bearbeitungsvorgänge durchführen, wobei jeweils ein verhältnismäßig geringer oder kein Umrüstaufwand notwendig ist.

Durch die Verfahrbarkeit der Werkstückhaltevorrichtungen lassen sich die Werkstücke von einer, im gesamten Verfahrbereich der Werkstückhaltevorrichtungen, beliebig angeordneten und mindestens in zwei Richtungen verfahrbaren Werkstückfördereinrichtung abholen und nach der Bearbeitung ablegen. Hierdurch kann eine konstruktiv besonders einfache Werkstückfördereinrichtung zum Einsatz kommen. Die unabhängige, getrennte Verfahrbarkeit der Werkstückhaltevorrichtungen ermöglicht dabei auf einfache Weise die Spannbewegung zur Aufnahme wellenförmiger Werkstücke unterschiedlicher Längen an ihren Enden.

In weiterer Ausgestaltung der Erfindung können die Werkstückhaltevorrichtungen entweder auf einer gemeinsamen Führungsbahn oder auf unterschiedlichen Führungsbahnen verfahrbar sein.

Nach einer weiteren vorteilhaften Ausgestaltung kann mindestens eine der Werkstückhaltevorrichtungen als ein Spindelstock ausgebildet sein. Je nach Verwendungsart kann dabei der Spindelstock mindestens eine Spindel mit Spannfutter für die Aufnahme eines Endes des Werkstückes aufweisen. Neben dem einspindligen Spindelstock ist insbesondere auch eine Doppelspindelanordnung auf einem Spindelstock möglich. Diesen Doppelspindeln sind dann entsprechende Werkstückhaltevorrichtungen in Doppelausführung zugeordnet. Der Spindelstock kann aber auch mit mindestens einer Hohlspindel für die Endenbearbeitung des Werkstückes ausgerüstet sein. In einem solchen Falle kann es zweckmäßig sein, dass die Hohlspindel nach Art einer Mittenantriebsvorrichtung ausgebildet ist.

Nach einer weiteren vorteilhaften Ausgestaltung der Erfindung kann mindestens eine der Werkstückhaltevorrichtungen mit einem verfahrbaren Schlitten und mindestens einem Reitstock ausgebildet sein. Ebenso kann es zweckmäßig sein, dass mindestens eine der Werkstückhaltevorrichtungen mit einem verfahrbaren Schlitten und mindestens einer Lünette ausgebildet ist. Für die Endenbearbeitung von Werkstücken kann es vorteilhaft sein, daß mindestens eine Werkstückhaltevorrichtung in verschiebbaren Böcken angeordnete Spannprismen für mindestens ein Werkstück für dessen Endenbearbeitung aufweist.

Eine weitere vorteilhafte Ausgestaltung ergibt sich dadurch, daß auf einer Führungsbahn zwei Spindelstöcke einander gegenüberliegend vorgesehen sind. Hierdurch kann das Werkstück zuerst von einem Ende aus bearbeitet, dann an den anderen Spindelstock übergeben werden, worauf das andere Ende des Werkstückes bearbeitet werden kann.

Es ist aber auch möglich, auf zwei unterschiedlichen Führungsbahnen zwei Spindelstöcke einander gegenüberliegend vorzusehen, wobei die Spindelstöcke dann so ausgebildet sind, daß sie mit ihren Achsen trotz der unterschiedlichen Führungsbahnen fluchten. Diese Möglichkeit ist deshalb vorteilhaft, weil hierdurch größere Freiheiten für einen Werkzeugträger bestehen.

Zur Erzielung kompakter Baueinheiten ist es vorteilhaft, wenn die Spindeln als Motorspindeln ausgebildet sind.

Um die verschiedensten Werkzeuge in bestimmungsgemäßer Weise zum Einsatz bringen zu können, ist nach der Erfindung vorgesehen, daß jeder Werkzeugträger mit mindestens einem Werkzeugträgerschlitten ausgebildet ist, wobei jeder Werkzeugträgerschlitten mindestens in einer der drei Achsen, nämlich X-Achse, Y-Achse und Z-Achse der Bearbeitungsvorrichtung verfahrbar ist.

Vorteilhafterweise kann als Antrieb für das Verfahren einer Werkstückhaltevorrichtung und/oder eines Werkzeugträgerschlittens ein Linearmotor dienen.

Weiterhin kann als Antrieb für das Verfahren einer Werkstückhaltevorrichtung und/oder eines Werkzeugträgerschlittens eine Kugelrollspindel mit Mutter dienen, von denen eine von einem Antriebsmotor antreibbar ist.

Nach einer weiteren vorteilhaften Ausgestaltung der Erfindung ist vorgesehen, daß der Werkzeugträger um eine Symmetrieachse drehbar bzw. schwenkbar ist. Hierdurch können die unterschiedlichen Werkzeuge in Arbeitsposition gebracht werden. Außerdem kann durch diese Verdrehbarkeit des Werkzeugträgers erreicht werden, daß bei einem Einsatz eines Werkzeugträgers für die gleichzeitige Bearbeitung von zwei in nebeneinanderliegenden Spindeln gehaltenen Werkstücken mittels zweier Werkzeuge, eine Korrektur des Werkzeugeingriffes aufgrund unterschiedlicher Abnutzung der Werkzeuge durchgeführt werden kann.

In weiterer vorteilhafter Ausgestaltung kann der Werkzeugträger mindestens ein feststehendes oder mindestens ein antreibbares Werkzeug aufnehmen. Ein antreibbares Werkzeug kann z.B. eine Schleifscheibe, ein Fräser, ein Wälzfräser oder ein Bohrer sein.

Der Werkzeugträger kann mindestens eine Einrichtung zum Härten von Werkstücken, mindestens eine Einrichtung zum Schweißen von Werkstücken, mindestens eine Einrichtung zum Fügen von Werkstücken oder mindestens eine Einrichtung mit Rollen zur spanlosen Formung von Werkstücken aufweisen.

Die Erfindung wird nachfolgend anhand mehrerer in der Zeichnung dargestellten Ausführungsbeispiele näher erläutert. In der Zeichnung zeigen:
- **Figur 1**:: Eine Vorderansicht eines ersten Ausführungsbeispieles einer Bearbeitungsvorrichtung;
- **Figur 2:**: Einen Schnitt nach der Linie II - II;
- **Figur 3:**: Eine der Figur 1 entsprechende Ansicht einer Bearbeitungsvorrichtung mit je einer Schleifscheibe an zwei Werkzeugträgern;
- **Figur 4:**: Einen Schnitt nach der Linie IV - IV in Figur 3;
- **Figur 5:**: Eine Schnittdarstellung entsprechend den Figuren 2 und 4 durch eine doppelspindlige Bearbeitungsvorrichtung; und
- **Figur 6**:: Eine Draufsicht auf die Bearbeitungsvorrichtung nach Figur 5.

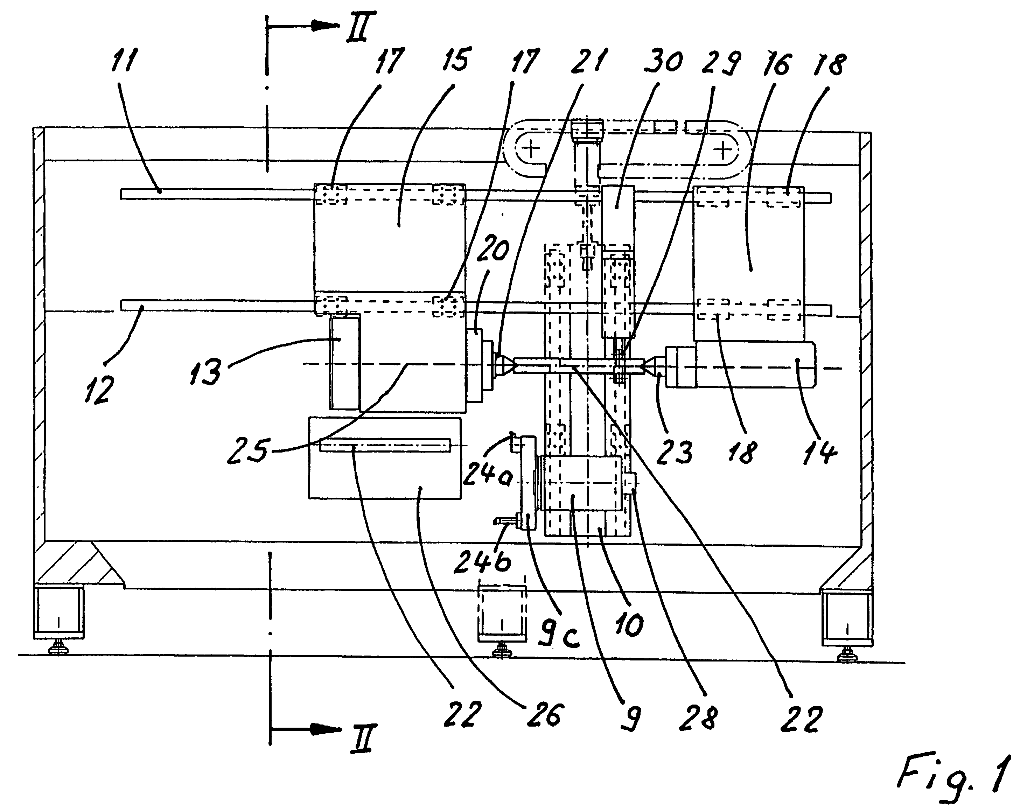

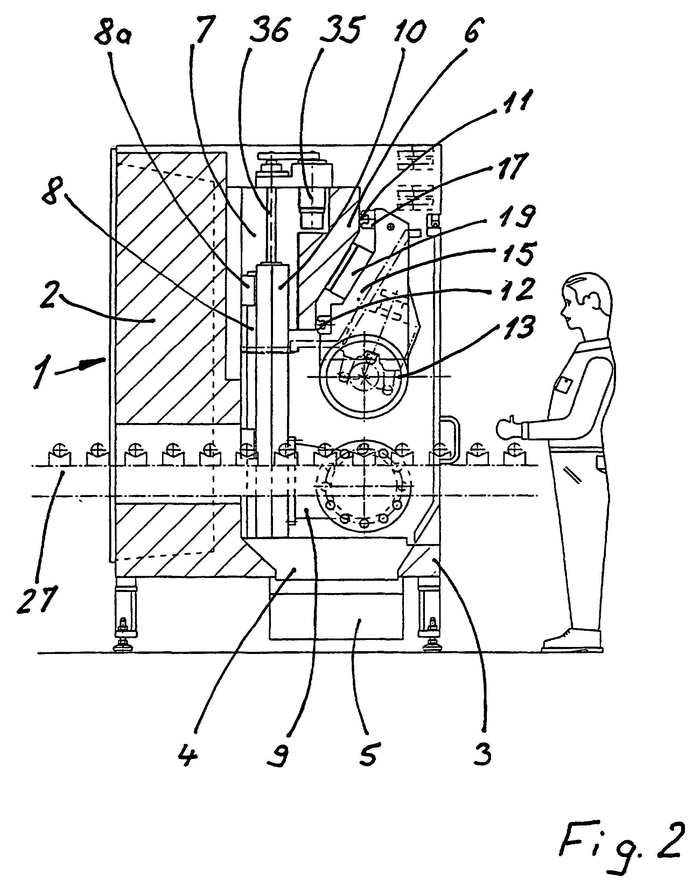

Wie aus den Darstellungen in den Figuren 1 und 2 ersichtlich, umfaßt die Bearbeitungsvorrichtung ein im wesentlichen L-förmiges Maschinengrundgestell 1, welches beispielsweise aus Reaktionsharzbeton besteht, wobei der senkrechte Schenkel 2 wesentlich stabiler ausgebildet ist als der unten liegende waagrechte Schenkel 3, der eine in Längsrichtung verlaufende Durchbrechung 4 für den Spänedurchfall aufweist, wobei unterhalb der Durchbrechung 4 ein Spänesammeltrog mit entsprecherider Fördervorrichtung 5 vorgesehen ist. Eine solche Ausgestaltung ist für sich gesehen bekannt und deshalb nicht näher erläutert. An dem senkrechten, sehr massiv ausgebildeten Schenkel 2 des Maschinengrundgestells ist eine nach vorne zum Arbeitsraum auskragende Konsole 6 ausgebildet, die einstückig mit dem vertikalen Schenkel ausgeführt ist und eine Durchbrechung 7 aufweist, durch welche eine Linearführung 8 mit Führungswagen 8a hindurchgreift, die für die vertikale Verschiebung eines Werkzeugträgers 9 vorgesehen sind. Dabei ist der Führungswagen 8a feststehend angeordnet und die Linearführungen 8 befinden sich an einem Werkzeugträgerschlitten 10, auf dem der Werkzeugträger 9 angeordnet ist. Im vorliegenden Ausführungsbeispiel umfaßt der Werkzeugträger 9 einen Werzeugrevolver 9c für verschiedene, feststehende Werkzeuge 24a und rotierende Werkzeuge 24b und einen Antrieb 28 für den Werkzeugrevolver 9c. Der Führungswagen 8a ist an dem senkrechten Schenkel 2 befestigt. An dem auskragenden Ende der Konsole 6 sind zwei sowohl in der Höhe als auch gegenüber der Vertikalebene versetzt angeordnet Linearführungen 11 und 12 vorgesehen, die insgesamt eine Führungsbahn für einen Spindelstock 13 und einen Reitstock 14 bilden. Sowohl der Reitstock 13 als auch der Spindelstock 14 sind mit entsprechenden Schlitten 15 und 16 und damit ausgerüsteten Führungswagen 17 und 18 versehen, so daß diese Schlitten zusammen mit dem Spindel- und Reitstock auf den Linearführungen 11 und 12 mittels Linearmotoren 19 sowohl gemeinsam als auch getrennt voneinander verfahrbar sind. In Figur 2 ist nur der Linearmotor 19 des Schlittens 15 für den Spindelstock 13 dargestellt.

Der Spindelstock 13 ist mit einer Motorspindel 20 ausgerüstet, die ein Spannfutter 21 für die Aufnahme eines Werkstückes 22 aufweist. Dieses Werkstück ist an seinem gegenüberliegenden Ende durch eine Körnerspitze 23 des Reistockes 14 abgestützt. Bei der Bearbeitung des Werkstückes 22 kommt der Werkzeugträger 9 mit seinen am Umfang angeordneten vielen Werkzeugen 24a, 24b zum Einsatz, der zu diesem Zwecke entlang der vertikalen Führung 8 in X-Richtung, d.h. in vertikaler Richtung verfahrbar ist. Der Werkzeugträger 9 ist mit den verschiedensten Werkzeugen ausgerüstet. Im dargestellten Ausführungsbeispiel sind es z.B. ein Drehmeißel 24a oder ein Bohrer 24b.

Da die Führungsanordnung bestehend aus den Linearführungen 11 und 12 und dem Führungswagen 17 oberhalb der Symmetrieachse 25 des Spindelstockes und des Reitstockes bzw. oberhalb der Werkstückrotations- bzw. Werkstückschwenkachse liegt, werden die Linearführungen 11 und 12 nicht durch den Spänefall oder möglicherweise herabfallende Werkstücke beeinträchtigt.

Da der Spindelstock 13 mit seinem Schlitten 15 und der Reitstock 14 mit seinem Schlitten 16 sowohl gemeinsam als auch getrennt voneinander verfahrbar sind, kann ein Werkstück, beispielsweise das wellenartige Werkstück 22, wenn es einmal zwischen dem Spindelstock 13 und dem Reitstock 14 eingespannt ist, entlang seiner gesamten Länge durch gemeinsames Verfahren des Spindel- und des Reitstockes bearbeitet werden. Die getrennte Verfahrbarkeit beider Einheiten ist z.B. erforderlich, wenn ein zu bearbeitendes Werkstück aufgenommen werden soll.

Ein auf den Linearführungen 11, 12 geführter Schlitten 30 trägt eine Lünette 29 zur weiteren Abstützung des Werkstückes 22. Die Lünette 29 und der Schlitten 30 bilden eine Werkstückhaltevorrichtung.

Wie aus den Figuren 1 und 2 ersichtlich, ist der vertikale Schenkel 2 des Maschinengrundgestells mit einer Durchbrechung 26 für eine im wesentlichen horizontal verlaufende Fördereinrichtung 27 versehen, auf der die einzelnen Rohlinge herangebracht und die fertig bearbeiteten Werkstücke 22 abtransportiert werden. Zu diesem Zweck ist es notwendig, daß der Spindelstock 13 soweit nach links in Figur 1 verfahrbar ist, bis ein auf der Fördervorrichtung 27 liegendes Werkstück 22 durch eine nicht näher dargestellte Hubvorrichtung soweit angehoben werden kann, daß es vom Spannfutter des Spindelstockes 13 erfaßbar ist. Hierauf wird dann der Reitstock 14 gegen das Werkstück gefahren, um dieses zwischen dem Spindelstock 13 und dem Reitstock 14 festzuspannen, sofern es sich um wellenartige und nicht um scheibenförmige Werkstücke handelt. Für diesen Spannvorgang ist die unabhängige Verfahrbarkeit beider Werkstückhaltevorrichtungen, d.h. des Spindelstockes 13 und des Reitstockes 14 erforderlich. Nach der fertigen Bearbeitung des Werkstückes wird die aus Spindelstock 13, Reitstock 14 und Werkstück 22 bestehende Einheit gemeinsam soweit verfahren, daß mittels der nicht dargestellten Hubvorrichtung das fertig bearbeitete Werkstück übernommen und auf die Transportvorrichtung 27 abgelegt werden kann.

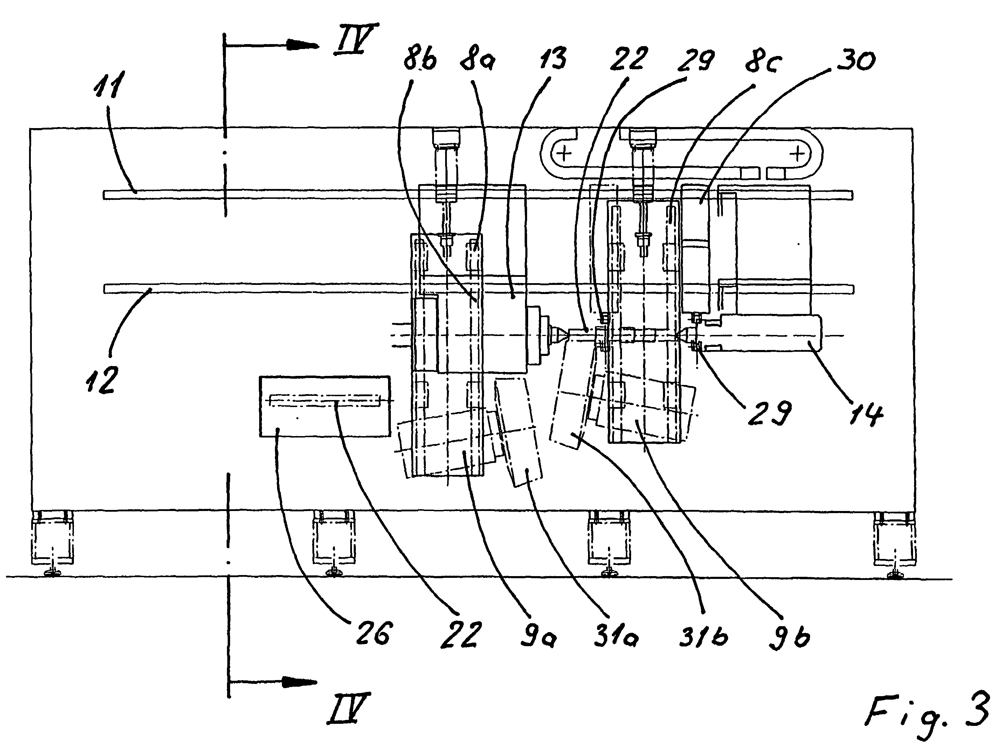

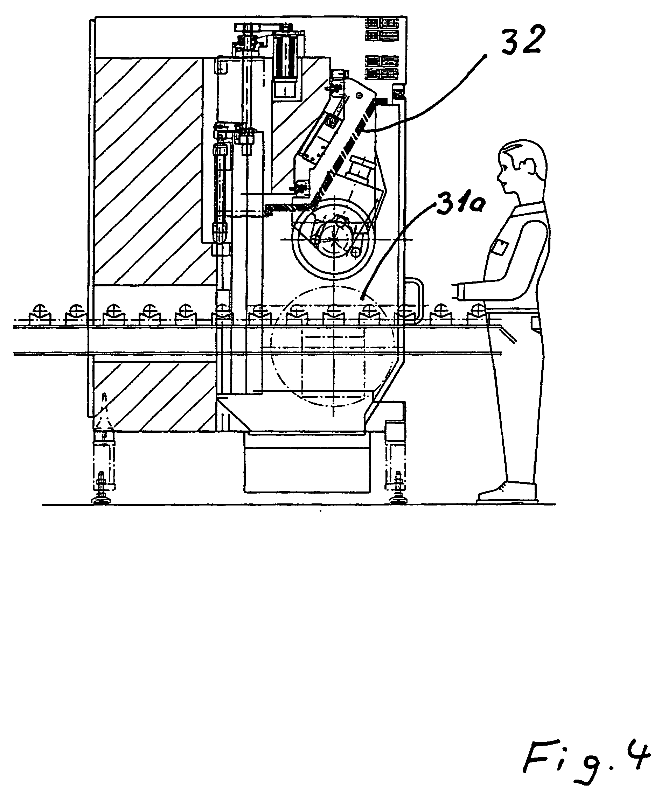

Die in den Figuren 3 und 4 dargestellte weitere Ausführungsform der Bearbeitungsvorrichtung entspricht im wesentlichen derjenigen nach den Figuren 1 und 2, so daß übereinstimmende Teile mit den gleichen Bezugszeichen versehen sind. Eine wesentliche Änderung besteht darin, daß zwei vertikale Führungsbahnen 8b und 8c für zwei vertikal geführte Werkzeugschlitten vorgesehen sind, wobei die jeweiligen Werkzeugträger 9a, 9b anstelle eines Scheibenrevolvers mit Schleifscheiben 31 a und 31b ausgerüstet sind, die für das Rundschleifen des Werkstückes 22 dienen. Auch hier wird das Werkstück 22 mittels einer Lünette 29 zusätzlich abgestützt, die mit ihrem Schlitten 30 auf den Linearführungen 11 und 12, d.h. auf der gleichen Führungsbahn wie Spindelstock 13 und der Reitstock 14 verschiebbar ist. Für diese zusätzliche Werkstückhaltevorrichtung könnte auch eine gesonderte Führungsbahn vorgesehen sein.

In Figur 4 ist zusätzlich noch eine Teleskopabdeckung 32 dargestellt, die bei der Bearbeitungsvorrichtung nach den Figuren 1 und 2 fehlt. Diese Teleskopabdeckung 32 befindet sich jeweils zu beiden Seiten des Schlittens 15 für den Spindelstock 13 und des Schlittens 16 für den Reitstock 14.

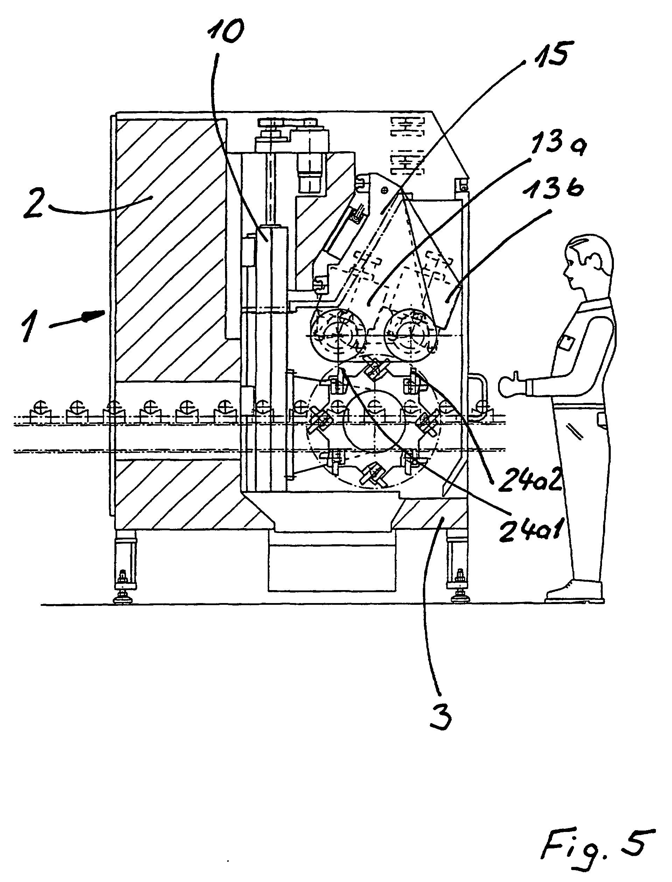

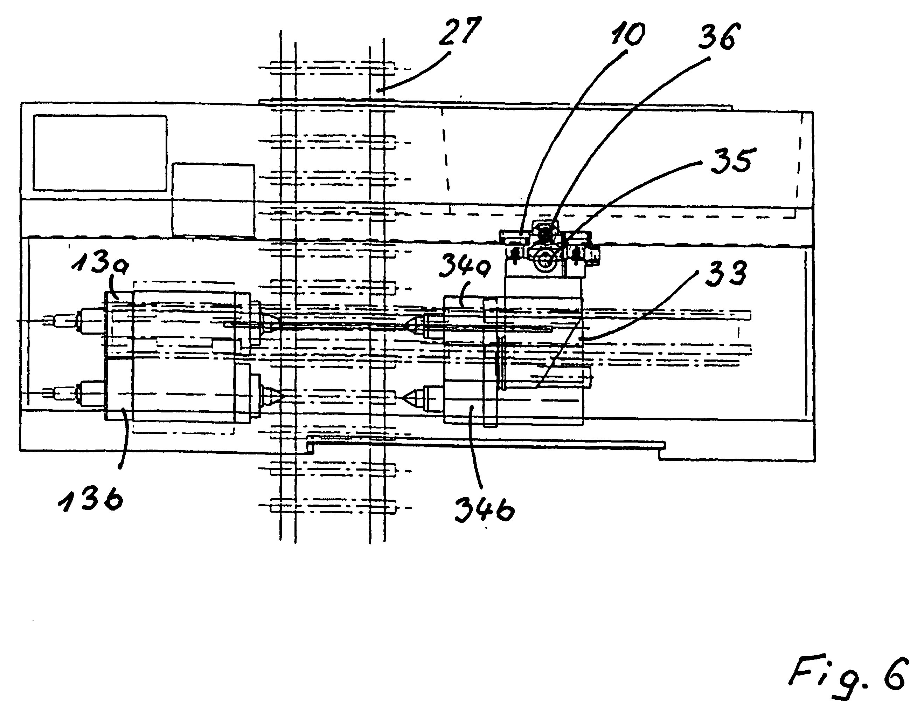

Bei der weiteren Ausführungsform nach Figur 5 sind auf dem Schlitten 15 zwei Spindeln 13a und 13b angeordnet, die in einer festen Beziehung zueinander stehen, die somit einen Doppelspindelstock bilden. Diesem Doppelspindelstock mit den zwei Spindeln 13a und 13b sind zwei auf einem gemeinsamen Schlitten 33 angeordnete Reitstöcke 34a und 34b zugeordnet, die in dieser Zuordnung aus Figur 6 erkennbar sind. Eine weitere Abweichung gegenüber der Ausführungsform nach den Figuren 1 und 2 besteht darin, daß der Werkzeugrevolver 9a an jeder Werkzeugaufnahmestelle mit zwei Werkzeugen versehen ist, um die Anzahl der Werkzeuge zu erhöhen, insbesondere da es sich bei der vorliegenden Ausführungsform um eine Maschine mit einem Doppelspindelstock handelt. Die mit 24a1 und 24a2 bezeichneten Aufnahmestellen, tragen die Werkzeuge, die zum gleichzeitigen Einsatz an den Werkstücken dienen, die von den Spindeln 13a und 13b des Doppelspindelstoc??kes gehalten sind. Ein etwaiger Unterschied der Werkzeugzuordnung zum jeweiligen Werkstück, beispielsweise durch unterschiedlichen Verschleiß der Werkzeuge, wird durch entsprechende Drehung des Revolvers ausgeglichen.

Aus Figur 6 ist nicht nur die gegenseitige Zuordnung des Doppelspindelstockes und des Doppelreitstockes mit den jeweiligen Spindeln 13a, 13b sowie die jeweiligen Reitstöcken 34a und 34b erkennbar, sondern auch die Zuordnung der Werkstückfördereinrichtung 27 sowie die Anordnung des Werkzeugträgerschlittens 10 mit den Führungswagen 8a in Draufsicht erkennbar. Weiterhin ist in diesem Zusammenhang der insbesondere aus Figur 2 deutlich zu ersehende Antriebsmotor 35 mit Kugelrollspindel 36 zu entnehmen.

## Patentansprüche

1. Bearbeitungsvorrichtung für Werkstücke (22) mit einer Werkstück förder einrichtung (27) mit mindestens zwei Werkstückhaltevorrichtungen (13, 14), die relativ zueinander in horizontaler Richtung verfahrbar sind, sowie mit mindestens einem mindestens in einer senkrecht zu der Fahrbahn (11, 12) der Werkstückhaltevorrichtungen verfahrbaren Werkzeugträger (9), der soweit verfahrbar ist, dass der Angriffspunkt des Werkzeuges (24a) am Werkstück (22) unterhalb der Werkstückrotationsachse (25) bzw. Werkstückschwenkachse liegt, wobei die einander zugeordneten Werkstückhaltevorrichtungen (13, 14, 29) sowohl gemeinsam als auch getrennt voneinander verfahrbar sind, **dadurch gekennzeichnet, dass** die Fahrbahn (11, 12) bzw. die Fahrbahnen der Werkstückhaltevorrichtungen (13, 14) oberhalb der Werkstückrotationsachse (25) bzw. der Werkstückschwenkachse liegt bzw. liegen und dass die einander zugeordneten Werkstückhaltevorrichtungen (13, 14) nach unten hängend an der horizontalen Führungsbahn (11, 12) bzw. den Führungsbahnen in eine Position oberhalb einer neben dem Arbeitsraum angeordneten Werkstückfördereinrichtung (27) verfahrbar geführt sind.

2. Bearbeitungsvorrichtung nach Anspruch 1, **dadurch gekennzeichnet, dass** die Werkstückhaltevorrichtungen (13, 14, 29) auf einer gemeinsamen Führungsbahn (11, 12) verfahrbar sind.

3. Bearbeitungsvorrichtung nach Anspruch 1, **dadurch gekennzeichnet, dass** die Werkstückhaltevorrichtungen (13, 14, 29) auf unterschiedlichen Führungsbahnen verfahrbar sind.

4. Bearbeitungsvorrichtung nach einem der Ansprüche 1 bis 3, **dadurch gekennzeichnet, dass** mindestens eine der Werkstückhaltevorrichtungen als ein Spindelstock (13) ausgebildet ist.

5. Bearbeitungsvorrichtung nach Anspruch 4, **dadurch gekennzeichnet, dass** der Spindelstock (13) mindestens eine Spindel mit Spannfutter (21) für die Aufnahme eines Endes des Werkstückes (22) aufweist.

6. Bearbeitungsvorrichtung nach Anspruch 4, **dadurch gekennzeichnet, dass** mindestens ein Spindelstock mit mindestens einer Hohlspindel für die Endenbearbeitung des Werkstückes ausgerüstet ist.

7. Bearbeitungsvorrichtung nach Anspruch 6, **dadurch gekennzeichnet, dass** die Hohlspindel nach Art einer Mittenantriebsvorrichtung ausgebildet ist.

8. Bearbeitungsvorrichtung nach einem der Ansprüche 1 bis 7, **dadurch gekennzeichnet, dass** mindestens eine der Werkstückhaltevorrichtungen mit einem verfahrbaren Schlitten und mindestens einem Reitstock (14) ausgebildet ist.

9. Bearbeitungsvorrichtung nach einem der Ansprüche 1 bis 8, **dadurch gekennzeichnet, dass** mindestens eine der Werkstückhaltevorrichtungen mit einem verfahrbaren Schlitten und mindestens einer Lünette (29) ausgebildet ist.

10. Bearbeitungsvorrichtung nach einem der Ansprüche 1 bis 9, **dadurch gekennzeichnet, dass** mindestens eine Werkstückhaltevorrichtung in verschiebbaren Böcken angeordnete Spannprismen für mindestens ein Werkstück für dessen Endenbearbeitung aufweist.

11. Bearbeitungsvorrichtung nach Anspruch 2 und 4 oder 5, **dadurch gekennzeichnet, dass** auf einer Führungsbahn zwei Spindelstöcke einander gegenüberliegend vorgesehen sind.

12. Bearbeitungsvorrichtung nach Anspruch 3 und 4 oder 5, **dadurch gekennzeichnet, dass** auf zwei unterschiedlichen Führungsbahnen zwei Spindelstöcke einander gegenüberliegend vorgesehen sind.

13. Bearbeitungsvorrichtung nach Anspruch 4 bis 7 und 11 oder 12, **dadurch gekennzeichnet, dass** die Spindeln als Motorspindeln (20) ausgebildet sind.

14. Bearbeitungsvorrichtung nach einem der Ansprüche 1 bis 13, **dadurch gekennzeichnet, dass** jeder Werkzeugträger (9) mit mindestens einem Werkzeugträgerschlitten ausgebildet ist, wobei jeder Werkzeugträgerschlitten mindestens in einer der drei Achsen, nämlich X-Achse, Y-Achse und Z-Achse der Bearbeitungsvorrichtung verfahrbar ist.

15. Bearbeitungsvorrichtung nach einem der Ansprüche 1 bis 14, **dadurch gekennzeichnet, dass** als Antrieb für das Verfahren einer Werkstückhaltevorrichtung (13, 14) und/oder eines Werkzeugträgerschlittens (10) ein Linearmotor (19) dient.

16. Bearbeitungsvorrichtung nach einem der Ansprüche 1 bis 14, **dadurch gekennzeichnet, dass** als Antrieb für das Verfahren einer Werkstückhaltevorrichtung (13, 14) und/oder eines Werkzeugträgerschlittens (10) eine Kugelrollspindel (36) mit Mutter dient, von denen eine von einem Antriebsmotor (35) antreibbar ist.

17. Bearbeitungsvorrichtung nach Anspruch 14 bis 16, **dadurch gekennzeichnet, dass** der Werkzeugträger (9) um eine Symmetrieachse drehbar bzw. schwenkbar ist.

18. Bearbeitungsvorrichtung nach einem der Ansprüche 14 bis 17, **dadurch gekennzeichnet, dass** der Werkzeugträger (9) mindestens ein feststehendes Werkzeug (24a) aufnimmt.

19. Bearbeitungsvorrichtung nach Anspruch 14 bis 17, **dadurch gekennzeichnet, dass** der Werkzeugträger mindestens ein antreibbares Werkzeug (24b, 31a, 31b) aufnimmt.

20. Bearbeitungsvorrichtung nach Anspruch 19, **dadurch gekennzeichnet, dass** ein antreibbares Werkzeug (31a, 31b) ein Schleifwerkzeug ist.

21. Bearbeitungsvorrichtung nach Anspruch 19, **dadurch gekennzeichnet, dass** ein antreibbares Werkzeug ein Fräser ist.

22. Bearbeitungsvorrichtung nach Anspruch 19, **dadurch gekennzeichnet, dass** das antreibbare Werkzeug ein Wälzfräser ist.

23. Bearbeitungsvorrichtung nach Anspruch 19, **dadurch gekennzeichnet, dass** das antreibbare Werkzeug ein Bohrer (24b) ist.

24. Bearbeitungsvorrichtung nach einem der Ansprüche 14 bis 17, **dadurch gekennzeichnet, dass** der Werkzeugträger mindestens eine Einrichtung zum Härten von Werkstücken aufweist.

25. Bearbeitungsvorrichtung nach einem der Ansprüche 14 bis 17, **dadurch gekennzeichnet, dass** der Werkzeugträger mindestens eine Einrichtung zum Schweißen von Werkstücken aufweist.

26. Bearbeitungsvorrichtung nach einem der Ansprüche 14 bis 17, **dadurch gekennzeichnet, dass** der Werkzeugträger mindestens eine Einrichtung zum Fügen von Werkstücken aufweist.

27. Bearbeitungsvorrichtung nach einem der Ansprüche 14 bis 17, **dadurch gekennzeichnet, dass** der Werkzeugträger Rollen zur spanlosen Formung von Werkstücken aufweist.

## Claims

1. Machining device for workpieces (22) with a workpiece-conveying device (27), having at least two workpiece-holding devices (13, 14) which are displaceable relative to one another in the horizontal direction, and having at least one tool carrier (9) which can be displaced at least perpendicular to the guideway (11, 12) of the workpiece-holding devices and can be displaced sufficiently far for the point of engagement of the tool (24a) on the workpiece (22) to be located below the workpiece axis of rotation (25) or workpiece pivot axis, it being possible for the mutually associated workpiece-holding devices (13, 14, 29) to be displaced both together and separately from one another, **characterized in that** the guideway (11, 12) or guideways of the workpiece-holding devices (13, 14) is/are located above the workpiece axis of rotation (25) or the workpiece pivot axis, and **in that** the mutually associated workpiece-holding devices (13, 14), hanging downwards from the horizontal guideway (11, 12) or guideways, are guided such that they can be displaced into a position above a workpiece-conveying means (27) arranged next to the working space.

2. Machining device according to Claim 1, **characterized in that** the workpiece -holding devices (13, 14, 29) can be displaced on a common guideway (11, 12).

3. Machining device according to Claim 1, **characterized in that** the workpiece -holding devices (13, 14, 29) can be displaced on different guideways.

4. Machining device according to one of Claims 1 to 3, **characterized in that** at least one of the workpiece - holding devices is designed as a headstock (13).

5. Machining device according to Claim 4, **characterized in that** the headstock (13) has at least one spindle with chuck (21) for receiving one end of the workpiece (22).

6. Machining device according to Claim 4, **characterized in that** at least one headstock is equipped with at least one hollow spindle for machining the ends of the workpiece.

7. Machining device according to Claim 6, **characterized in that** the hollow spindle is designed in the form of a centre-drive device.

8. Machining device according to one of Claims 1 to 7, **characterized in that** at least one of the workpiece - holding devices is designed with a displaceable carriage and at least one tailstock (14).

9. Machining device according to one of Claims 1 to 8, **characterized in that** at least one of the workpiece - holding devices is designed with a displaceable carriage and at least one steady rest (29).

10. Machining device according to one of Claims 1 to 9, **characterized in that** at least one workpiece -holding device has V-blocks, arranged in displaceable supports, for at least one workpiece for machining its ends.

11. Machining device according to Claim 2 and 4 or 5, **characterized in that** two headstoc ks are provided opposite one another on a guideway.

12. Machining device according to Claim 3 and 4 or 5, **characterized in that** two headstocks are provided opposite one another on two different guideways.

13. Machining device according to Claims 4 to 7 a nd 11 or 12, **characterized in that** the spindles are designed as motor spindles (20).

14. Machining device according to one of Claims 1 to 13, **characterized in that** each tool carrier (9) is designed with at least one tool -carrier carriage, each tool-carrier carriage being displaceable at least in one of the three axes, namely the X axis, the Y axis and the Z axis, of the machining device.

15. Machining device according to one of Claims 1 to 14, **characterized in that** a linear motor (19) is used as drive for the displacement of a workpiece -holding device (13, 14) and/or of a tool-carrier carriage (10).

16. Machining device according to one of Claims 1 to 14, **characterized in that** a recirculating ball screw (36) with nut, one of which can be driven by a drive motor (35), is used as drive for the displacement of a workpiece-holding device (13, 14) and/or of a tool carrier carriage (10).

17. Machining device according to Claims 14 to 16, **characterized in that** the tool carrier (9) can pivot and/or rotate about an axis of symmetry.

18. Machining device according to one of Claims 14 to 17, **characterized in that** the tool carrier (9) receives at least one stationary tool (24a).

19. Machining device according to Claims 14 to 17, **characterized in that** the tool carrie r receives at least one drivable tool (24b, 31a, 31b).

20. Machining device according to Claim 19, **characterized in that** a drivable tool (31a, 31b) is a grinding tool.

21. Machining device according to Claim 19, **characterized in that** a drivable tool is a milling cutter.

22. Machining device according to Claim 19, **characterized in that** the drivable tool is a hobbing cutter.

23. Machining device according to Claim 19, **characterized in that** the drivable tool is a drill (24b).

24. Machining device according to one of Claims 14 to 17, **characterized in that** the tool carrier has at least one means for hardening workpieces.

25. Machining device according to one of Claims 14 to 17, **characterized in that** the tool carrier has at least one means for welding workpieces.

26. Machining device according to one of Claims 14 to 17, **characterized in that** the tool carrier has at least one means for joining workpieces.

27. Machining device according to one of Claims 14 to 17, **characterized in that** the tool carrier has rol ls for the chipless shaping of workpieces.

## Revendications

1. Dispositif d'usinage de pièces (22) avec un dispositif de transport de pièces (27) comprenant au moins deux dispositifs de support de pièces (13, 14) qui peuvent être déplacés les uns par rapport aux autres dans la direction horizontale , ainsi qu'au moins un porte -outil (9) déplaçable perpendiculairement à la piste de conduite (11, 12) des dispositifs de support de pièces (13, 14), qui peut être déplacé dans une mesure telle que le point d'attaque de l'outil (24a) sur la pièce (22) se trouve en dessous de l'axe de rotation de la pièce (25) ou de l'axe de pivotement de la pièce, les dispositifs de support de pièces associés les uns aux autres (13, 14, 29) pouvant être déplacés aussi bien conjointement que séparément les uns des autres, **caractérisé en ce que** la piste de conduite (11, 12), respectivement les pistes de conduite des dispositifs de support de pièces (13, 14) se trouve ou se trouvent au-dessus de l'axe de rotation de la pièce (25) ou de l'axe de pivotement de la pièce et **en ce que** les dispositifs de support de pièces (13, 14) associés les uns aux autres sont guidés de manière déplaçable vers le bas en suspension sur la piste de guidage horizontale (11, 12) ou les pistes de guidage dans une position au -dessus d'un dispositif de tran sport de pièces (27) disposé à côté de l'espace de travail.

2. Dispositif d'usinage selon la revendication 1, **caractérisé en ce que** les dispositifs de support de pièces (13, 14, 29) peuvent être déplacés sur une piste de guidage commune (11, 12).

3. Dispositif d'usinage selon la revendication 1, **caractérisé en ce que** les dispositifs de support de pièces (13, 14, 29) peuvent être déplacés sur des pistes de guidage différentes.

4. Dispositif d'usinage selon l'une quelconque des revendications 1 à 3, **caractérisé en ce qu'au** moins un des dispositifs de support de pièces est réalisé sous forme de poupée de machine (13).

5. Dispositif d'usinage selon la revendication 4, **caractérisé en ce que** la poupée de machine (13) présente au moins une broche avec un mandrin de serrage (21) pour recevoir une extrémité de la pièce (22).

6. Dispositif d'usinage selon la revendication 4, **caractérisé en ce qu'au** moins une poupée de machine est équipée d'au moins une broche creuse pour l'usinage des extrémités de la pièce.

7. Dispositif d'usinage selon la revendication 6, **caractérisé en ce que** la broche creuse est réalisée à la manière d'un dispositif d'entraînement central.

8. Dispositif d'usinage selon l'une quelconque des revendications 1 à 7, **caractérisé en ce qu'**au moins l'un des dispositifs de support de pièces est réalisé avec un chariot déplaçable et au moins une contre-poupée (14).

9. Dispositif d'usinage selon l'une quelconque des revendications 1 à 8, **caractérisé en ce qu'au** moins l'un des dispositifs de support de p ièces est réalisé avec un chariot déplaçable et au moins une lunette (29).

10. Dispositif d'usinage selon l'une quelconque des revendications 1 à 9, **caractérisé en ce qu'**au moins un dispositif de support de pièces présente des prismes de serrage disposés dans des blocs déplaçables pour au moins une pièce en vue de son usinage d'extrémité.

11. Dispositif d'usinage selon les revendications 2 et 4 ou 5, **caractérisé en ce que** l'on prévoit sur une piste de guidage deux poupées de machine opposées l'une à l'autre.

12. Dispositif d'usinage selon les revendications 3 et 4 ou 5, **caractérisé en ce que** l'on prévoit sur deux pistes de guidage différentes deux poupées de machine opposées l'une à l'autre.

13. Dispositif d'usinage selon les revendications 4 à 7 et 11 ou 12, **caractérisé en ce que** les broches sont réalisées sous forme de broches motorisées (20).

14. Dispositif d'usinage selon l'une quelconque des revendications 1 à 13, **caractérisé en ce que** chaque porte-outil (9) est réalisé avec au moins un chariot porte-outil, chaque chariot porte-outil étant déplaçable dans au moins l'un des trois axes, à savoir l'axe X, l'axe Y et l'axe Z du dispositif d'usinage.

15. Dispositif d'usinage selon l'une quelconque des revendications 1 à 14, **caractérisé en ce que** l'on utilise comme entraînement pour le déplacement d'un dispositif de support de pièces (13, 14) et/ou d'un chariot porte -outil (10) un moteur linéaire (19).

16. Dispositif d'usinage selon l'une quelconque des revendications 1 à 14, **caractérisé en ce que** l'on utilise comme entraînement pour le déplacement d'un dispositif de support de pièces (13, 14) et/ou d'un chariot porte -outil (10) une vis à billes (36) avec des écrous, dont l'un peut être entraîné par un moteur d'entraînement (35).

17. Dispositif d'usinage selon l'une quelconque des revendications 14 à 16, **caractérisé en ce que** le porte-outil (9) peut tourner ou pivoter autour d'un axe de symétrie.

18. Dispositif d'usinage selon l'une quelconque des revendications 14 à 17, **caractérisé en ce que** le porte-outil (9) reçoit au moins un outil fixe (24a).

19. Dispositif d'usinage selon les revendications 14 à 17, **caractérisé en ce que** le porte-outil reçoit au moins un outil entraînable (24b, 31a, 31b).

20. Dispositif d'usinage selon la revendication 19, **caractérisé en ce qu'**un outil entraînable (31a, 31b) est un outil de meulage.

21. Dispositif d'usinage selon la revendication 19, **caractérisé en ce qu'**un outil entraînable est une fraise.

22. Dispositif d'usinage selon la revendication 19, **caractérisé en ce que** l'outil entraînable est une fraise-mère.

23. Dispositif d'usinage selon la revendication 19, **caractérisé en ce que** l'outil entraînable est un foret (24b).

24. Dispositif d'usinage selon l'une quelconque des revendications 14 à 17, **caractérisé en ce que** le porte-outil présente au moins un dispositif pour durcir les pièces.

25. Dispositif d'usinage selon l'une quelconque des revendications 14 à 17, **caractérisé en ce que** le porte-outil présente au moins un dispositif pour souder les pièces.

26. Dispositif d'usinage selon l'une quelconque des revendications 14 à 17, **caractérisé en ce que** le porte-outil présente au moins un dispositif pour assembler les pièces.

27. Dispositif d'usinage selon l'une quelconque des revendications 14 à 17, **caractérisé en ce que** le porte-outil présente des rouleaux pour le façonnage de pièces sans enlèvement de copeaux.
